# EUROPÄISCHE PATENTSCHRIFT

(11) **EP 1 951 525 B1**
(45) Veröffentlichungstag und Bekanntmachung des Hinweises auf die Patenterteilung: **11.12.2013**
(21) Anmeldenummer: 06807013.5
(22) Anmeldetag: 05.10.2006
(51) Int. Cl.: B32B 27/34, H01B 3/30

(54) **METALL-KUNSTSTOFF-VERBUNDKÖRPER**
METAL-PLASTIC COMPOSITE
CORPS COMPOSITE METAL-PLASTIQUE

(30) Priorität: 21.11.2005 DE 102005055297
(43) Veröffentlichungstag der Anmeldung: 06.08.2008
(73) Patentinhaber: Hühoco Metalloberflächenveredelung GmbH, 42279 Wuppertal (DE)
(72) Erfinder: WELSCH, Klaus, 58339 Breckerfeld (DE)
(74) Vertreter: Patentanwälte Dr. Solf & Zapf
(86) Internationale Anmeldenummer: PCT/EP2006/067106
(87) Internationale Veröffentlichungsnummer: WO 2007/057249

(56) Entgegenhaltungen:
- EP-A- 1 157 822
- EP-A- 1 333 052
- WO-A-94/19184
- WO-A-96/25292
- DE-A1- 4 119 513
- DE-A1- 4 243 795
- DE-A1- 10 361 096
- US-A1- 2004 200 636

## Beschreibung

Die vorliegende Erfindung betrifft einen Metall-Kunststoff-Verbundkörper, bestehend aus einer Metallschicht und aus einem thermoplastischen Werkstoff sowie aus einer zwischen der Metallschicht und dem thermoplastischen Werkstoff angeordneten Haftvermittlerschicht, wobei der thermoplastische Werkstoff (2) aus Polyamid besteht und der Haftvermittler der Haftvermittlerschicht aus einem amidhaltigen Lack gebildet ist, wobei die Haftvermittlerschicht aus mindestens zwei Teilschichten besteht,

Metall-Kunststoff-Verbundkörper der vorstehend genannten Art sind bekannt. So beschreibt die DE 38 18 479 A1 einen Verbundwerkstoff, der eine Metallschicht, einen Haftvermittler und eine Polypropylenschicht enthält. Die Haftvermittlerschicht dient dabei dazu, die Metallschicht und die Polypropylenschicht stoffschlüssig, mittels einer hochadhäsiven Bindung, zusammenzuhalten. Der Haftvermittler besteht dabei im Wesentlichen aus einem Epoxidharz auf Basis Bisphenol A und die Polypropylenschicht enthält in der Masse ein pfropfbares Silan sowie ein Peroxid als Vernetzungsmittel oder ist an ihrer der Metallschicht zugewandten Oberfläche mit einer Mischung aus pfropfbarem Silan und Peroxid behandelt. Der Haftvermittler wird nach einer Vorreinigung der Metallschicht, beispielsweise eines Metallbleches, unverdünnt oder mittels geeigneter Lösungsmittel auf eine gewünschte Viskosität eingestellt, in Mengen von 1 bis 10 g/m² aufgetragen und einer thermischen Behandlung bei 170 °C bis 190 °C unterzogen, die etwa 5 bis 20 Minuten dauert. Die so vorbehandelten Oberflächen werden dann direkt einem Vorverbund oder einer Formteilherstellung zugeführt. Vorteilhaft ist dabei, dass die Metallschicht dabei vor oder nach der Beschichtung mit dem Haftvermittler nach einem für Metall üblichen ein- oder mehrstufigen Tiefziehprozess bei Raumtemperatur zu einem Metallvorformteil verformt werden kann. Technologisch nachteilig ist, dass zur Herstellung des Haftvermittlers im Produktionsprozess ein Zweikomponentensystem mit genau einzuhaltendem Verhältnis zwischen dem zum Einsatz kommenden Epoxidharz und einem Härter sowie gegebenenfalls einem Beschleuniger verwendet werden muss.

Auch in der DE 195 35 915 A1 ist ein Metall-Kunststoff-Verbundkörper beschrieben, insofern dieses Dokument einen Haftvermittler für die Verbindung von insbesondere aus Polypropylen bestehenden Kunststofffolien mit vorzugsweise aus Metall bestehenden Substraten betrifft. Der Haftvermittler enthält ein gepfropftes Polypropylen-Random-Blockcopolymerisat und wenigstens einen UV-Stabilisator. U. a. wird die Beschichtung von 0,04 bis 1 mm dicken Metallblechen, wie Schwarzblech, Weissblech, Aluminium und verschiedenen Eisenlegierungen, die gegebenenfalls mit einer Passivierungsschicht auf der Basis von Nickel-, Chrom und Zinkverbindungen versehen sind, beschrieben.

Insbesondere bei der Beschichtung von Metallteilen, die mit Polyamid umgossen werden, besteht das Problem, dass durch unterschiedliche Werkstoffeigenschaften bei der Fertigung - beispielsweise durch Schrumpf-Abhebungen entstehen, die z. B. das Eindringen von Wasser in das fertige Produkt möglich machen. Zur Beseitigung dieser Undichtigkeiten sind separate technologisch aufwändige Verfahren, wie beispielsweise Imprägnierverfahren, notwendig.

Aus der DE 103 61 096 A1 ist ein gattungsgemäßer Metall-KunststoffVerbundkörper bekannt. Hierbei kann die thermoplastische Kunststoffschicht aus PA6 oder PA66 bestehen, wobei die Möglichkeit besteht, die Haftvermittlerschicht auf ihrer der thermoplastischen Kunststoffschicht zugewandten Seite auf Basis von PUR und PA, PA11, PA12 und entsprechende flexible Copolyamide auf Basis von PA11 und PA12, Copolyamide auf Basis PA6 und PA66 mit im Vergleich zu PA6 und PA66 niedrigerem Schmelzpunkt oder ausgewählten thermoplastischen Elastomeren sowie aus thermoplastischen Polyurethanen auszuführen.

Das Aufbringen der Haftvermittlerschicht ist dabei durch Lackieren und das Aufbringen der Kunststoffschicht durch Spritzgießen erreichbar.

Bei einem alternativen Verfahren, mittels dem die Haftvermittlerschicht auf den metallischen Bereich des Bauteiles aufgebracht werden kann, wird zunächst ein in einem Lösungsmittel gelöstes Polymer auf den metallischen Bereich aufgebracht. Anschließend wird der Polymerfilm getrocknet und der metallische Bereich nahe der Schmelztemperatur des Polymers, vorzugsweise unter Schutzgasatmosphäre erwärmt, wobei der wesentlich unterhalb der Schmelztemperatur des Polymers getrocknete Polymerfilm auf dem metallischen Bereich nicht haftet. Werden die Polymerfilme beispielsweise durch Lösen von PBT oder PA66 in Hexafluorisopropanol (HFIP) bei Raumtemperatur und einem Aufbringen der Lösung auf den metallischen Bereich sowie einem anschließenden Verdunsten des Lösungsmittels unter Vakuum auf dem metallischen Bereich erzeugt, haften derartige Polymerfilme auf dem metallischen Bereich nicht. Wird hingegen der metallische Bereich und der Polymerfilm nahe der Schmelztemperatur der Polymere auf ca. 225 °C bzw. 265 °C erwärmt, bildet sich zwischen dem metallischen Bereich, der beispielsweise aus CuSn6 bzw. Sn gebildet sein kann, und dem Polymerfilm eine Haftung bzw. eine stoffschlüssige Verbindung aus.

Der vorliegenden Erfindung liegt die Aufgabe zu Grunde, einen Metall-Kunststoff-Verbundkörper der eingangs genannten Art zu schaffen, der sich bei möglichem Einsatz von Polyamiden als thermoplastischen Werkstoffen durch eine einfache und kostengünstige Herstellungsweise auszeichnet, wobei die Metallschicht und der thermoplastische Werkstoff derart fest sicher aneinander gebunden sein sollen, dass eine Abhebung voneinander auch bei hoher mechanischer Beanspruchung nicht auftritt.

Diese Aufgabe wird durch die Merkmale des Kennzeichens des Anspruchs 1 gelöst.

Drahtlacke sind Isolierlacke auf Kunstharzbasis, die als möglichst dünne homogene elektrisch isolierende Filme auf Kupfer- oder Aluminiumdrähte aufgebracht werden. Dabei unterscheidet man verschiedene Gruppen von Drahtlacken, wie THEIC-modifizierte Polyesterimide, Polyamide und Epoxide, lötbare Drahtlacke aus Polyurethan und Kleblacke, wie z. B. aus PVB und Polyamid.

Überraschenderweise wurde gefunden, dass bei Verwendung eines amidhaltigen Drahtlacks als Haftvermittler außerordentlich gute Adhäsionswerte in der Paarung mit Polymeren, wie Polyamid, dessen Moleküle eine polare Struktur aufweisen, erzielt werden können. Dies zeigte sich sowohl bei der Beschichtung von Metallteilen, die in Polyamid eingegossen werden, insbesondere an als kritisch zu betrachtenden hinterspritzten Stellen, als auch bei durch Coextrusion oder bei nachträglicher Laminierung der mit der Haftvermittlungsschicht versehenen Metallschicht mit dem thermoplastischen Werkstoff, beispielsweise mit einer unter Wärme und Druck aufgewalzten Folie oder Platte.

Durch den Einfluss der Wärme erfolgt, insbesondere bei einer Temperatur oberhalb des Erweichungspunktes des mit dem Metall zu verbindenden Polyamidwerkstoffs, über den Haftvermittler die Anbindung des Polyamids an die Metallschicht, wobei sich im Besonderen an der Grenzfläche zwischen der Haftvermittlerschicht und dem Polyamidwerkstoff miteinander verschmolzene Übergangszonen und im Polyamidwerkstoff - bei der Abkühlung entstehende - Bereiche aus amorpher Polyamidphase ausbilden, die lichtrnikroskopisch an einem Schliff nachweisbar und von der Ublicherweise kristallinen Polyamidstruktur differenzierbar sind. Zwar kommt es bei der beim Abkühlen des besondere bei einer Temperatur oberhalb des Erweichungspunktes des mit dem Metall verbundenden Polyamids. Dies wird dadurch deutlich, dass in einer erfindungsgemäßen Verbundkörpers durch die Erstarrung des Polyamids zu den bekannten Schrumpferscheinungen, jedoch werden die dabei entstehenden Spannungen vorteilhafterweise durch den Haftvermittler kompensiert und es entstehen keine Risse und/oder Delaminationen.

Metallschichten können dabei alle in Bandform denkbaren metallischen Werkstoffe sein. So kann der metallische Träger beispielsweise aus kaltgewalztem Bandstahl, bevorzugt in den Qualitäten DC 01 bis DC 04 nach DIN EN 10 139, aus Fein- oder Feinstblech oder aus einem Edelstahl-, Aluminium- oder Buntmetallband bestehen. Auch der Einsatz profilierter Träger als Metallschicht ist möglich.

Es hat sich auch gezeigt, dass dem an sich isolierend wirkenden Drahtlack zur Erzeugung einer elektrischen Leitfähigkeit Graphit in fein dispergierter Form zugegeben werden kann, ohne dass die Haftungseigenschaften des thermoplastischen Polymers an der Metallschicht merklich davon beeinträchtigt würden.

Was die erfindungsgemäße Verwendung des amidhaltigen Drahtlacks als Haftvermittler und die Zusammensetzung des thermoplastischen Werkstoffs aus Polyamid betrifft, so sei hier ausgeführt, dass Polyamid auf verschiedene Art und Weise hergestellt werden und infolgedessen auch eine unterschiedliche Struktur aufweisen kann. So ist Polyamid 6 - auch als Polycaprolactam, PA 6 oder Nylon 6 bezeichnet - ein Polyamid mit sechs Kohlenstoff-Atomen in der Monomereinheit und wird aus dem ringförmigen ε-caprolactam durch eine den Ring öffnende Polymerisation hergestellt. Polyamid 66 - auch als PA 6,6 oder Nylon 6,6 bezeichnet - wird stattdessen durch eine Polykondensation hergestellt, wobei aus Hexamethylendiamin und Adipinsäure unter Wasserabspaltung die Ketten entstehen. Polyamid 12 (PA 12) ist ein thermoplastisches Polymer mit 12 Kohlenstoffatomen in der Monomereinheit und wird aus Laurinlactam (13-gliedriger Ring mit Amidgruppe), durch eine den Ring öffnende Polymerisation hergestellt. Unter diesen Voraussetzungen werden, wenn erfindungsgemäß "Polyamid" erwähnt wird, alle dessen vorerwähnten Formen verstanden, und wenn ein "amidhaltiger" Drahtlack erwähnt wird, Zusammensetzungen verstanden, in denen das Amid als vollständig polymerisiertes Polyamid, als Bestandteil eines Copolymers, als Präpolymer, z. B. als Oligomer, oder auch in monomerer Form, wie als Caprolactam-Ring, vorliegen kann. Entscheidend für die durch die Erfindung bewirkte außerordentlich hohe Adhäsivität ist dabei das Vorhandensein der stark polaren Amidgruppe, durch die einerseits insbesondere im Verbund zwischen Drahtlack und Polymer aber auch mit dem freie Elektronen aufweisenden Metall starke zwischenmolekulare Wechselwirkungskräfte entstehen. Dadurch ist es vorteilhafterweise möglich, ein Halbzeug, das aus der Metallschicht und der darauf aufgebrachten Haftvermittlerschicht besteht, insbesondere nach ihrer gegenseitigen Verbindung, tiefzuziehen, ohne dass später Fehlstellen mit verminderter Bindungsfestigkeit im erfindungsgemäßen Verbundkörper entstehen.

Des Weiteren kann die Haftvermittlerschicht auch als Doppelschicht ausgebildet sein, d. h. sie kann zumindest aus zwei Schichten bestehen, wobei sie mindestens eine unmittelbar auf dem metallischen Träger angeordnete Primerschicht und eine darüber liegende Coverschicht umfaßt, die zur Bindung an den thermoplastischen Werkstoff bestimmt ist. In den beiden Teilschichten kann dabei das Amid des Drahtlacks in unterschiedlicher Zusammensetzung vorliegen, beispielsweise zum Teil als vollständig polymerisiertes Polyamid, und zum Teil - wie oben beschrieben - modifiziert, so dass durch die Coverschicht eine Versiegelung, z. B. gegen eine schädliche Einwirkung der Luftfeuchtigkeit erzielt wird.

Ein Vorteil des erfindungsgemäßen Verbundkörpers besteht darin, dass basierend auf dem festen Verbund der Metallschicht mit dem thermoplastischen Werkstoff, sich zahlreiche konstruktive Anwendungsmöglichkeiten in verschiedenen Industriezweigen eröffnen. Dies ist z. B. neben der Verwendung als beschichtetes Band, eine voluminöse Ausführung, wie beispielsweise die eines umspritzten Bauteils, wobei es vorteihafterweise - wie bereits erwähnt - auch an hinterspritzten Stellen über den Haftvermittler zur Ausbildung einer hochfesten Adhäsionsverbindung zwischen Metall und Kunststoff kommt. Stanz- und Biegestanzteile der Metallschicht können flach oder profiliert, vollständig oder teilweise in den Kunststoff eingebettet werden, wobei dann der thermoplastische Werkstoff unter Zwischenlage der Haftvermittlerschicht beidseitig mit der Metallschicht verbunden ist. Bei metallischen Stanz- und Biege-Stanzteilen sollte die Haftvermittlerschicht vorhandene Stanzkanten vollständig bedecken, bis auf möglicherweise vorhandene Trennkanten von kleinen Stegen, über die das Teil gegebenenfalls bis zur Endverarbeitung mit anderen Teilen zu bandartigen Strukturen vereinigt ist. D h. die Haftvermittlerschicht sollte zumindest nach dem Stanzen aufgebracht werden.

Zum Aufbringen der Haftvermittlerschicht auf die Metallschicht sind grundsätzlich die verschiedensten Verfahren, wie Aufsprühen, Düsen- oder Walzenauftrag des Haftvermittlers oder Tauchen eines Metallteils in den Haftvermittler, möglich.

Weitere vorteilhafte Ausführungen der Erfindung sind in den Unteransprüchen und der nachfolgenden speziellen Beschreibung enthalten. Anhand eines in der beiliegenden Zeichnung dargestellten Ausführungsbeispiels wird die Erfindung dabei näher erläutert. Es zeigen:
- Fig. 1: einen Ausschnitt aus einer Ausführung eines erfindungsgemäßen Verbundkörpers im Querschnitt,
- Fig. 2: ein vergrößertes lichtmikroskopisches Querschliffbild eines Ausschnitts aus einem erfindungsgemäßen Verbundkörper.

In den beiden Figuren der Zeichnung sind dieselben und einander entsprechende Teile mit denselben Bezugszeichen versehen, so daß sie auch jeweils nur einmal beschrieben werden.

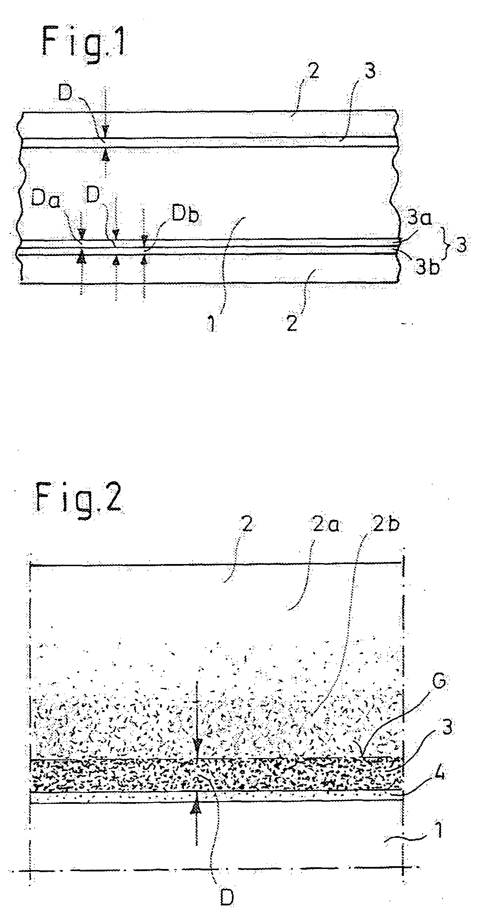

Wie Fig. 1 zeigt, besteht ein erfindungsgemäßer Verbundkörper aus einer Metallschicht 1 und aus einem thermoplastischen Werkstoff 2 sowie aus einer zwischen der Metallschicht 1 und dem thermoplastischen Werkstoff 2 angeordneten Haftvermittlerschicht 3. Der thermoplastische Werkstoff 2 besteht aus Polyamid. Der Haftvermittler der Haftvermittlerschicht 3 ist aus einem amidhaltigen Drahtlack gebildet und enthält insbesondere ebenfalls Polyamid, wie es in dem kresolhaltigen Überzugslack 1223 oder den kresolfreien Backlacken 1208 und 1224, dem Backlack 1251 der Firma Wiedeking GmbH bzw. in den Drahtlacken E 8297 und E 8340 der Firma Herberts ® Electro Drahtlacke der Fall ist.

Der Drahtlack sollte mit Vorteil einen Feststoffanteil von 8 bis 25 Masseprozent, vorzugsweise von 10 bis 16 Masseprozent, enthalten und je nach der bevorzugten Art der Auftragung, wie Aufsprühen, Gießen, Walzenauftrag oder Tauchen, bei 23 °C eine Viskosität von 250 bis 1500 mPas aufweisen:

Die Schichtdicke D der Haftvermittlerschicht 3 kann dabei mit Vorteil im Bereich von 3 bis 20 µm, insbesondere im Bereich von 8 bis 15 µm, liegen.

Es kann auch vorgesehen sein, dass der Drahtlack zur Erzeugung einer elektrischen Leitfähigkeit zusätzliche Anteile von Graphit enthält. Durch die Höhe des Graphitanteils kann dabei vorteilhafterweise in weiten Grenzen ein erwünschter spezifischer elektrischer Widerstand der Haftvermittlerschicht 3 eingestellt werden, wodurch der Drahtlack seinen Charakter als Isolierlack verliert. Zur Erzeugung einer Schweißbarkeit kann der Graphitanteil dabei bis zu 40 Masseteile auf 100 Masseteile Drahtlack betragen, wobei bei Überschreiten eines oberen Grenzwertes die Leitfähigkeit nicht mehr zunimmt. Als optimal wird unter diesem Gesichtspunkt ein Graphitgehalt von 10 bis 30 Masseteilen auf 100 Masseteile Drahtlack angesehen.

In der dargestellten Ausführung ist der thermoplastische Werkstoff 2 unter Zwischenlage der Haftvermittlerschicht 3 beidseitig mit der Metallschicht 1 verbun den, aber auch eine nur einseitige Beschichtung der Metallschicht 1 fällt in den Rahmen der Erfindung.

Im oberen Teil der Fig. 1 ist die Haftvermittlerschicht 3 als Einzelschicht ausgebildet, während sie im unteren Teil als Doppelschicht ausgebildet ist und eine unmittelbar auf der Metallschicht 1 liegende Primerschicht 3a und eine auf der Primerschicht 3a liegende Coverschicht 3b umfaßt.

Die Schichtdicke D der Haftvermittlerschicht 3 kann dabei mit Vorteil im Bereich von 3 bis 20 µm, insbesondere im Bereich von 8 bis 15 µm, liegen.

Wie bereits erwähnt, kann bevorzugt in den beiden Teilschichten 3a, 3b für den Drahtlack eine unterschiedliche Zusammensetzung vorliegen, so dass die Coverschicht 3b geringerer Reaktivität und Bindungsfähigkeit bei Raumtemperatur eine Schutzschicht gegen schädliche Umwelteinflüsse bildet, wenn der Verbund aus Metallschicht 1 und thermoplastischem Werkstoff 2 als Halbzeug transportiert, gelagert oder vertrieben werden soll. In diesem Zustand kann vorteilhafterweise das Halbzeug, insbesondere unter Einsatz eines elektrischen Widerstandsschweißverfahrens, auch schweißfähig sein.

Der Drahtlack für die unmittelbar auf der Metallschicht 1 liegende Primerschicht 3a ist aus einer Zusammensetzung mit höherem Feststoffgehalt als dem der darüber liegende Coverschicht 3b gebildet, mit beispielsweise einen Feststoffgehalt von 30 bis 45 Prozent, vorzugsweise von etwa 32 bis 38 Prozent, wie dies bei dem Drahtlack 1832 der Firma Wiedeking GmbH der Fall ist, der ein Polyamidimid-Copolymer enthält. Ein solcher Lack weist bei 23 °C eine im Haake-Viskosimeter ermittelte Viskosität von 1750 ± 250 mPas auf.

Die auf der Primerschicht 3a liegende Coverschicht 3b kann bevorzugt aus den oben in Verbindung mit der Einzelschicht genannten Lacken, insbesondere dem Lack 1251 der Firma Wiedeking GmbH, bestehen. Ein solcher Lack kann in An passung an das vorgesehene Auftragungsverfahren in unterschiedlichen Formen zum Einsatz kommen, beispielsweise bei einem Feststoffgehalt von 16 ± 1 Prozent mit einer bei 23 °C ermittelten Viskosität von 900 ± 100 mPas oder bei einem Feststoffgehalt von 18 ± 1 Prozent mit einer Viskosität von 1300 ± 200 mPas.

Bei einer Ausbildung der Haftvermittlerschicht 3 als Doppelschicht kann die Dicke Da der Primerschicht 3a mit Vorteil im Bereich von 2 bis 10 µm, vorzugsweise im Bereich von 4 bis 8 µm, liegen, während für die Dicke Db der Coverschicht 3b ein Bereich von 4 bis 20 µm, vorzugsweise im Bereich von 6 bis 15 µm, als optimal anzusehen ist. Damit ergibt sich für die Gesamtdicke D der Haftvermittlerschicht 3 ein Bereich von etwa 6 bis 30 µm, bevorzugt von 10 bis 23 µm.

Die über die Haftvermittlerschicht 3 hergestellte Bindung zwischen der Metallschicht 1 und dem thermoplastischen Werkstoff 2 entsteht durch eine thermische Behandlung, insbesondere bei einer Temperatur oberhalb des Erweichungspunktes des als thermoplastischer Werkstoff 2 eingesetzten Polyamids. So kann die Temperatur der Herstellung der Bindung beispielsweise die Vergusstemperatur des Werkstoffs bei einem Spritzgießprozess oder die Extrusionstemperatur in einem Coextrusionsverfahren sein und Maximalwerte bis zu 260 °C annehmen. Da die Bindung bei derartig gegenüber der Raumtemperatur hohen Temperaturen entsteht, liegt auch die thermische Beständigkeit des erfindungsgemäßen Verbundkörpers vorteilhafterweise entsprechend hoch.

Unter dem Gesichtspunkt eines sich beim Endprodukt nach der Herstellung einstellenden optimalen Eigenschaftsbildes des erfindungsgemäßen Verbundkörpers hat sich auch gezeigt, dass in der Haftvermittlerschicht 3 insbesondere der Einsatz von derartigen Lacken von Vorteil ist, bei denen das im Lack enthaltene Polymer einen hohen Schmelzpunkt hat, d. h. einen Schmelzpunkt, der sich von seiner Zersetzungstemperatur nur wenig unterscheidet. Im Zusammenhang damit ist die Ermittlung einer sogenannten Wiedererwei chungstemperatur zu nennen, wonach die fertige Haftvermittlerschicht 3 jeweils eine bestimmte Zeit lang bestimmten Temperaturen ausgesetzt wird, und dann die Temperatur ermittelt wird, bei der unter den gegebenen Bedingungen eine Wiedererweichung des Haftvermittlers erfolgt. Diese Temperatur kann bei einer Expositionsdauer von 30 Minuten mit Vorteil beispielsweise bei etwa 180 °C liegen.

Das in Fig. 2 dargestellte lichtmikroskopische Schliffbild eines erfindungsgemäßen Verbundkörpers zeigt den - beispielsweise im oberen Teil von Fig. 1 vorliegenden - charakteristischen Aufbau aus der Metallschicht 1, dem Polyamid als thermoplastischem Werkstoff und der Haftvermittlerschicht 3. Des Weiteren ist eine Schutzschicht 4 erkennbar, die bevorzugt aus einem Schmelztauchüberzug gebildet sein kann. Bei der Schutzschicht 4 kann es sich z. B. um eine durch Feuerverzinken (technologisches Kurzzeichen: Z) aufgebrachte Schicht handeln, wobei ein Feinblech durch ein schmelzflüssiges Zinkbad geführt und die gewünschte Zinkauflage nach einem Düsenabstreifverfahren eingestellt und geregelt werden kann.

Die Schutzschicht 4 kann mit Vorteil auch eine feueraluminierte Schicht (technologisches Kurzzeichen: AS) sein, die dadurch entsteht, dass ein, vorzugsweise kaltgewalztes, Stahlband mit einem Aluminium-Silizium-Überzug versehen wird. Ein solcher Überzug besteht aus einer Aluminium-Legierung mit etwa 8 bis 10 % Silizium. Durch eine derartige Beschichtung weist das Material eine ausgezeichnete Hitzebeständigkeit auf und besitzt eine hohe Wärmerückstrahlfähigkeit.

Mit dem Vorhandensein der beschriebenen Schutzschichten 4 ist des Weiteren der Vorteil verbunden, dass der metallische Charakter, der mit der Haftvermittlerschicht 3 zu bedeckenden Oberfläche nicht verloren geht.

Fig. 2 veranschaulicht auch, dass die Anbindung des Polyamids über die Haftvermittlerschicht 3 an die Metallschicht 2 durch Wärmeeinwirkung erfolgt ist, ins Grenzschicht G zwischen der Haftvermittlerschicht 3 und dem Polyamidwerkstoff miteinander verschmolzene Übergangszonen und im Polyamidwerkstoff selbst - bei der Abkühlung entstandene - Bereiche 2b aus amorpher Polyamidphase ausgebildet sind, die sich im lichtmikroskopischen Bild deutlich von der darüber liegenden kristallinen Polyamidstruktur 2a unterscheiden lassen.

Die Erfindung beschränkt sich nicht auf das vorstehende Ausführungsbeispiel. So ist es beispielsweise, wie erwähnt, möglich, den erfindungsgemäß verwendeten amidhaltigen Drahtlack auf verschiedenartige Weise zu modifizieren, beispielsweise durch bestimmte Lösungsmittel oder Zusatzstoffe. Als Lösungsmittel kommen dabei beispielsweise leichte aromatische Erdölfraktionen, Phenol, Kresol, Xylol, Benzylakohol sowie N-Methyl-2-pyrrolidon und N,N-Dimethylacetamid in Frage. Auch das Vorhandensein von Polyamid-Copolymeren im Drahtklack ist - wie erwähnt - möglich. Auf der Metallschicht 1 kann gegebenenfalls eine andere als die dargestellte, an sich bekannte Passivierungs- oder Schutzschicht 4 vorgesehen sein, ohne dass der Rahmen der Erfindung verlassen wird.

Der Verwendung des amidhaltigen Drahtlackes als Haftvermittler zwischen Polyamid und einem metallischen Werkstoff wird ebenfalls erfinderische Bedeutung beigemessen.

### Bezugszeichen

- 1: Metallschicht
- 2: thermoplastischer Werkstoff, Polyamid
- 2a: kristalliner Bereich von 2
- 2b: amorpher Bereich von 2
- 3: Haftvermittlerschicht
- 3a: Primerschicht von 3
- 3b: Coverschicht von 3
- 4: Schutzschicht auf 1

- D: Dicke von 3
- Da: Dicke von 3a
- Db: Dicke von 3b
- G: Grenzschicht zwischen 2 und 3

## Patentansprüche

1. Metall-Kunststoff-Verbundkörper, bestehend aus einer Metallschicht (1) und aus einem thermoplastischen Werkstoff (2) sowie aus einer zwischen der Metallschicht (1) und dem thermoplastischen Werkstoff angeordneten Haftvermittlerschicht (3), wobei der thermoplastische Werkstoff (2) aus Polyamid besteht und der Haftvermittler der Haftvermittlerschicht (3) aus einem amidhaltigen Lack gebildet ist, wobei die Haflvermittlerschicht (3) aus mindestens zwei Teilschichten (3a, 3b) besteht,
**dadurch gekennzeichnet, dass** eine unmittelbar auf der Metallschicht (1) aufliegende Primerschicht (3a) der Haftvermittlerschicht (3) aus einem Drahtlack gebildet ist, der einen höheren Feststoffgehalt und/oder eine höhere Viskosität aufweist als ein Drahtlack zur Bildung einer darüber liegenden Coverschicht (3b) der Haftvermittlerschicht (3) und/oder dass das Amid des Drahtlacks als vollständig polymerisiertes Polyamid, als Copolymer und/ oder als Präpolymer in der Primerschicht (3a) und der Coverschicht (3b) in derart unterschiedlicher Zusammensetzung vorliegt, dass die Coverschicht (3b) durch eine geringere Reaktivität und Bindungsfähigkeit bei Raumtemperatur als die Primerschicht (3a) eine Schutzschicht gegen schädliche Umwelteinflüsse, wie Luftfeuchtigkeit, bildet.

2. Verbundkörper nach Anspruch 1,
**dadurch gekennzeichnet, dass** in einer Grenzschicht (G) zwischen der Haftvermittlerschicht (3) und dem thermoplastischen Werkstoff (2) miteinander verschmolzene Übergangszonen und/oder im thermoplastischen Werkstoff (2) Bereiche (2b) mit amorpher Polyamidphase ausgebildet sind.

3. Verbundkörper nach Anspruch 1 oder 2,
**dadurch gekennzeichnet, dass** der Drahtlack zur Erzeugung einer elektrischen Leitfähigkeit und Schweißbarkeit Graphit enthält, wobei der Graphitanteil insbesondere bei bis zu 40 Masseteilen auf 100 Masseteile Drahtlack, bevorzugt bei 10 bis 30 Massenteilen auf 100 Masseteile Drahtlack, liegt.

4. Verbundkörper nach einem der Ansprüche 1 bis 3,
**dadurch gekennzeichnet, dass** der Drahtlack der Primerschicht (3a) einen Feststoffgehalt von 30 bis 45 Masseprozent, vorzugsweise von 32 bis 38 Masseprozent, enthält.

5. Verbundkörper nach einem der Ansprüche 1 bis 4,
**dadurch gekennzeichnet, dass** der Drahtlack der Coverschicht (3b) einen Feststoffanteil von 8 bis 25 Masseprozent, vorzugsweise von 10 bis 16 Masseprozent, enthält.

6. Verbundkörper nach einem der Ansprüche 1 bis 5,
**dadurch gekennzeichnet, dass** der Drahtlack als Lösungsmittel leichte aromatische Erdölfraktionen, Phenol, Kresol, Xylol, Benzylakohol, N-Methyl-2-pyrrolidon und/oder N,N-Dimethylacetamid enthält.

7. Verbundkörper nach einem der Ansprüche 1 bis 6,
**dadurch gekennzeichnet, dass** der Drahtlack bei 23 °C eine Viskosität von 250 bis 1500 mPas aufweist.

8. Verbundkörper nach einem der Ansprüche 1 bis 7,
**dadurch gekennzeichnet, dass** die Metallschicht (1) aus kaltgewalztem Bandstahl, vorzugsweise in den Qualitäten DC 01 bis DC 04 nach DIN EN 10 139, aus Fein- oder Feinstblech oder aus einem Edelstahl-, Aluminium- oder Buntmetallband besteht.

9. Verbundkörper nach einem der Ansprüche 1 bis 8,
**dadurch gekennzeichnet, dass** die Metallschicht (1) als Stanzteil oder Biege-Stanzteil vorliegt, wobei die Haftvermittlerschicht (3) vorhandene Stanzkanten bedeckt.

10. Verbundkörper nach einem der Ansprüche 1 bis 9,
**dadurch gekennzeichnet, dass** die Metallschicht (1) und die darauf aufgebrachte Haftvermittlerschicht (3) nach ihrer gegenseitigen Verbindung tiefgezogen sind.

11. Verbundkörper nach einem der Ansprüche 1 bis 7,
**dadurch gekennzeichnet, dass** die Metallschicht (1) in Profilform vorliegt.

12. Verbundkörper nach einem der Ansprüche 1 bis 11,
**dadurch gekennzeichnet, dass** der thermoplastische Werkstoff (2) in Form einer Folie oder Platte vorliegt.

13. Verbundkörper nach einem der Ansprüche 1 bis 12,
**dadurch gekennzeichnet, dass** der thermoplastische Werkstoff (2) unter Zwischenlage der Haftvermittlerschicht (3) beidseitig mit der Metallschicht (1) verbunden ist.

14. Verbundkörper nach einem der Ansprüche 1 bis 13,
**dadurch gekennzeichnet, dass** eine Dicke (Da) der Primerschicht (3a) im Bereich von 2 bis 10 µm, vorzugsweise im Bereich von 4 bis 8 µm, und eine Dicke (Db) der Coverschicht (3b) im Bereich von 4 bis 20 µm, vorzugsweise im Bereich von 6 bis 15 µm, liegt.

15. Verbundkörper nach einem der Ansprüche 1 bis 14,
**dadurch gekennzeichnet, dass** eine Dicke (D) der als Doppelschicht ausgebildeten Haftvermittlerschicht (3) im Bereich von 3 bis 30 µm, insbesondere im Bereich von 6 bis 23 µm, bevorzugt im Bereich von 10 bis 15 µm, liegt.

16. Verbundkörper nach einem der Ansprüche 1 bis 15,
**dadurch gekennzeichnet, dass** unter der Haftvermittlerschicht (3) auf die Metallschicht (1) eine Passivierungs- und/oder Schutzschicht (4) aufgebracht ist.

17. Verbundkörper nach Anspruch 16,
**dadurch gekennzeichnet, dass** die Passivierungs- und/oder Schutzschicht (4) aus einem Schmelztauchüberzug gebildet ist, der bevorzugt aus einer durch Feuerverzinken oder Feueraluminieren hergestellten Schicht besteht.

18. Verwendung eines amidhaltigen Drahtlackes als Haftvermittler zwischen einem aus Polyamid bestehenden thermoplastischen Werkstoff (2) und einem metallischen Werkstoff, vorzugsweise einer Metallschicht (1), insbesondere zur Herstellung eines Verbundkörpers nach einem der Ansprüche 1 bis 17,
**dadurch gekennzeichnet, dass** zur Bildung einer unmittelbar auf der Metallschicht (1) aufliegenden Primerschicht (3a) der Haftvermittlerschicht (3) Drahtlack verwendet wird, der einen höheren Feststoffgehalt und/oder eine höhere Viskosität aufweist als ein Drahtlack zur Bildung einer darüber liegenden Coverschicht (3b) der Haftvermittlerschicht (3) und/oder dass das Amid des Drahtlacks als vollständig polymerisiertes Polyamid, als Copolymer und/oder als Präpolymer in der Primerschicht (3a) und der Coverschicht (3b) in derart unterschiedlicher Zusammensetzung vorliegt, dass die Coverschicht (3b) durch eine geringere Reaktivität und Bindungsfähigkeit bei Raumtemperatur als die Primerschicht (3a) eine Schutzschicht gegen schädliche Umwelteinflüsse, wie Luftfeuchtigkeit, bildet.

19. Verwendung nach Anspruch 18,
**dadurch gekennzeichnet, dass** der amidhaltige Drahtlack durch Aufsprühen, Gießen, Düsen- oder Walzenauftrag auf den metallischen Werkstoff oder Tauchen eines Metallteils in den amidhaltigen Drahtlack aufgebracht wird.

20. Verwendung nach Anspruch 18 oder 19,
**dadurch gekennzeichnet, dass** der amidhaltige Drahtlack durch Wärmebehandlung an den aus Polyamid bestehenden thermoplastischen Werkstoff (2) gebunden wird.

21. Verwendung nach Anspruch 20,
**dadurch gekennzeichnet, dass** die Wärmebehandlung bei Temperaturen oberhalb des Erweichungspunktes von Polyamid, vorzugsweise in einem Temperaturbereich bis 260 °C, erfolgt.

22. Verwendung nach einem der Ansprüche 18 bis 21,
**dadurch gekennzeichnet, dass** als Drahtlack zur Ausbildung der Primerschicht (3a) ein solcher mit einem Feststoffgehalt von 30 bis 45 Masseprozent, vorzugsweise von 32 bis 38 Masseprozent, eingesetzt wird.

23. Verbundkörper nach einem der Ansprüche 18 bis 22,
**dadurch gekennzeichnet, dass** als Drahtlack zur Ausbildung der Coverschicht (3b) ein solcher mit einem Feststoffanteil von 8 bis 25 Masseprozent, vorzugsweise von 10 bis 16 Masseprozent, eingesetzt wird.

## Claims

1. A metal/plastics-material composite body, consisting of a metal layer (1) and of a thermoplastic material (2), and also of an adhesion-promoter layer (3) arranged between the metal layer (1) and the thermoplastic material, wherein the thermoplastic material (2) consists of polyamide and the adhesion promoter of the adhesion-promoter layer (3) is formed from an amide-containing enamel, wherein the adhesion-promoter layer (3) consists of at least two partial layers (3a, 3b),
**characterised in that** a primer layer (3 a) of the adhesion-promoter layer (3) which lies directly on the metal layer (1) is formed from a wire enamel which has a higher solids content and/or a higher viscosity than a wire enamel for forming an overlying cover layer (3b) of the adhesion-promoter layer (3), and/or **in that** the amide of the wire enamel is present as a fully polymerised polyamide, as a copolymer and/or as a prepolymer in the primer layer (3a) and the cover layer (3b) in compositions which differ such that the cover layer (3b), due to a lesser reactivity and bonding capacity at room temperature than the primer layer (3 a), forms a protective layer against harmful environmental influences, such as atmospheric moisture.

2. A composite body according to Claim 1, **characterised in that** zones of transition which are merged together are formed in a boundary layer (G) between the adhesion-promoter layer (3) and the thermoplastic material (2), and/or regions (2b) with an amorphous polyamide phase are formed in the thermoplastic material (2).

3. A composite body according to Claim 1 or 2, **characterised in that** the wire enamel contains graphite in order to bring about electrical conductivity and weldability, the graphite content being in particular up to 40 parts by weight per 100 parts by weight wire enamel, preferably 10 to 30 parts by weight per 100 parts by weight wire enamel.

4. A composite body according to one of Claims 1 to 3, **characterised in that** the wire enamel of the primer layer (3a) has a solids content of 30 to 45 percent by weight, preferably of 32 to 38 percent by weight.

5. A composite body according to one of Claims 1 to 4, **characterised in that** the wire enamel of the cover layer (3b) has a solids content of 8 to 25 percent by weight, preferably of 10 to 16 percent by weight.

6. A composite body according to one of Claims 1 to 5, **characterised in that** the wire enamel contains light aromatic petroleum fractions, phenol, cresol, xylene, benzyl alcohol, N-methyl-2-pyrrolidone and/or N,N-dimethylacetamide as solvent.

7. A composite body according to one of Claims 1 to 6, **characterised in that** the wire enamel at 23°C has a viscosity of 250 to 1500 mPas.

8. A composite body according to one of Claims 1 to 7, **characterised in that** the metal layer (1) consists of cold-rolled strip steel, preferably in qualities DC 01 to DC 04 according to DIN EN 10139, of fine sheet or ultrafine sheet, or of a high-grade steel strip, aluminium strip or non-ferrous heavy metal strip.

9. A composite body according to one of Claims 1 to 8, **characterised in that** the metal layer (1) is present as a cut part or cut-and-bent part, the adhesion-promoter layer (3) covering cut edges which are present.

10. A composite body according to one of Claims 1 to 9, **characterised in that** the metal layer (1) and the adhesion-promoter layer (3) applied thereto are deep-drawn once they have been mutually joined.

11. A composite body according to one of Claims 1 to 7, **characterised in that** the metal layer (1) is present in profile form.

12. A composite body according to one of Claims 1 to 11, **characterised in that** the thermoplastic material (2) is present in the form of a sheet or plate.

13. A composite body according to one of Claims 1 to 12, **characterised in that** the thermoplastic material (2) is joined on both sides to the metal layer (1) with the interposition of the adhesion-promoter layer (3).

14. A composite body according to one of Claims 1 to 13, **characterised in that** a thickness (Da) of the primer layer (3 a) lies in the range from 2 to 10 µm, preferably in the range from 4 to 8 µm, and a thickness (Db) of the cover layer (3b) lies in the range from 4 to 20 µm, preferably in the range from 6 to 15 µm.

15. A composite body according to one of Claims 1 to 14, **characterised in that** a thickness (D) of the adhesion-promoter layer (3), which is formed as a double layer, lies in the range from 3 to 30 µm, in particular in the range from 6 to 23 µm, preferably in the range from 10 to 15 µm.

16. A composite body according to one of Claims 1 to 15, **characterised in that** a passivation and/or protective layer (4) is applied beneath the adhesion-promoter layer (3) on the metal layer (1).

17. A composite body according to Claim 16, **characterised in that** the passivation and/or protective layer (4) is formed from a hot-dip coating, which preferably consists of a layer produced by hot-dip galvanising or hot-dip aluminising.

18. Use of an amide-containing wire enamel as adhesion promoter between a thermoplastic material (2) consisting of polyamide and a metallic material, preferably a metal layer (1), in particular for the production of a composite body according to one of Claims 1 to 17,
**characterised in that**, for forming a primer layer (3 a) of the adhesion-promoter layer (3) which lies directly on the metal layer (1), wire enamel is used which has a higher solids content and/or a higher viscosity than a wire enamel for forming an overlying cover layer (3b) of the adhesion-promoter layer (3), and/or **in that** the amide of the wire enamel is present as a fully polymerised polyamide, as a copolymer and/or as a prepolymer in the primer layer (3 a) and the cover layer (3b) in compositions which differ such that the cover layer (3b), due to a lesser reactivity and bonding capacity at room temperature than the primer layer (3 a), forms a protective layer against harmful environmental influences, such as atmospheric moisture.

19. Use according to Claim 18, **characterised in that** the amide-containing wire enamel is applied by spraying, pouring, nozzle or roller application onto/to the metallic material or by dipping a metal part into the amide-containing wire enamel.

20. Use according to Claim 18 or 19, **characterised in that** the amide-containing wire enamel is bonded by heat treatment to the thermoplastic material (2) which consists of polyamide.

21. Use according to Claim 20, **characterised in that** the heat treatment takes place at temperatures above the softening point of polyamide, preferably in a temperature range up to 260°C.

22. Use according to one of Claims 18 to 21, **characterised in that** a wire enamel with a solids content of 30 to 45 percent by weight, preferably of 32 to 38 percent by weight, is used as wire enamel for forming the primer layer (3a).

23. A composite body according to one of Claims 18 to 22, **characterised in that** a wire enamel with a solids content of 8 to 25 percent by weight, preferably of 10 to 16 percent by weight, is used as wire enamel for forming the cover layer (3b).

## Revendications

1. Corps composite métal-plastique, consistant en une couche de métal (1) et un matériau thermoplastique (2) et en une couche d'adhésif (3) disposée entre la couche de métal (1) et le matériau thermoplastique, dans lequel le matériau thermoplastique (2) consiste en un polyamide et l'adhésif de la couche d'adhésif (3) consiste en une laque contenant un amide, la couche d'adhésif (3) consistant en au moins deux couches partielles (3a, 3b),
**caractérisé en ce qu'**une couche d'apprêt (3a) se trouvant directement sur la couche de métal (1) de la couche d'adhésif (3) est formée d'un vernis pour fils métalliques qui présente une teneur en solide supérieure et/ou une viscosité supérieure à celle d'un vernis pour fils métalliques pour la formation d'une couche de couverture (3b) recouvrant la couche d'adhésif (3) et/ou **en ce que** l'amide du vernis pour fils métalliques se présente sous forme de polyamide complètement polymérisé, comme copolymère et/ou prépolymère dans la couche d'apprêt (3a) et la couche de couverture (3b) dans une composition différente telle que la couche de couverture (3b) forme par une réactivité et une capacité de liaison plus faible à température ambiante par rapport à la couche d'apprêt (3a), une couche protectrice contre les influences environnementales nocives telles que l'humidité de l'air.

2. Corps composite selon la revendication 1,
**caractérisé en ce que** dans une couche limite (G) entre la couche d'adhésif (3) et le matériau thermoplastique (2) sont formées ensemble des zones de transition fondues et/ou, dans le matériau thermoplastique (2), des zones (2b) avec une phase de polyamide amorphe.

3. Corps composite selon la revendication 1 ou 2,
**caractérisé en ce que** le vernis pour fils métalliques contient du graphite pour la génération d'une conductivité électrique et d'une soudabilité, la proportion de graphite allant en particulier jusqu'à 40 parties en masse sur 100 parties en masse de vernis pour fils métalliques, de préférence de 10 à 30 parties en masse sur 100 parties en masse de vernis pour fils métalliques.

4. Corps composite selon l'une des revendications 1 à 3,
**caractérisé en ce que** le vernis pour fils métalliques de la couche d'apprêt (3a) contient une teneur en solide de 30 à 45 % en masse, de préférence de 32 à 38 % en masse.

5. Corps composite selon l'une des revendications 1 à 4,
**caractérisé en ce que** le vernis pour fils métalliques de la couche de couverture (3b) contient une proportion de solide de 8 à 25 % en masse, de préférence de 10 à 16 parties en masse.

6. Corps composite selon l'une des revendications 1 à 5,
**caractérisé en ce que** le vernis pour fils métalliques contient comme solvant des fractions de pétrole aromatiques légères, du phénol, du crésol, du xylol, de l'alcool de benzyle, de la N-méthyl-2-pyrrolidone et/ou du N,N-diméthylacétamide.

7. Corps composite selon l'une des revendications 1 à 6,
**caractérisé en ce que** le vernis pour fils métalliques présente à 23 °C, une viscosité de 250 à 1500 mPa.

8. Corps composite selon l'une des revendications 1 à 7,
**caractérisé en ce que** la couche de métal (1) est constituée d'une bande d'acier laminée à froid, de préférence dans les qualités DC 01 à DC 04 selon la norme DIN EN 10 139, d'une tôle fine ou de fer noir ou d'une bande d'acier inoxydable, d'aluminium ou de métal composite.

9. Corps composite selon l'une des revendications 1 à 8,
**caractérisé en ce que** la couche de métal (1) se présente sous forme de pièce estampée ou de pièce pliée, la couche d'adhésif (3) recouvrant les bords d'estampage présents.

10. Corps composite selon l'une des revendications 1 à 9,
**caractérisé en ce que** la couche de métal (1) et la couche d'adhésif (3) appliquée sur celle-ci sont embouties après leur liaison réciproque.

11. Corps composite selon l'une des revendications 1 à 7,
**caractérisé en ce que** la couche de métal (1) se présente sous forme d'un profil.

12. Corps composite selon l'une des revendications 1 à 11,
**caractérisé en ce que** le matériau thermoplastique (2) se présente sous la forme d'une feuille ou d'une plaque.

13. Corps composite selon l'une des revendications 1 à 12,
**caractérisé en ce que** le matériau thermoplastique (2) est lié sous la strate intermédiaire de la couche d'adhésif (3) des deux côtés avec la couche de métal (1).

14. Corps composite selon l'une des revendications 1 à 13,
**caractérisé en ce qu'**une épaisseur (Da) de la couche d'apprêt (3a) se situe dans la plage de 2 à 10 µm, de préférence dans la plage de 4 à 8 µm et une épaisseur (Db) de la couche de couverture (3b) se situe dans la plage de 4 à 20 µm, de préférence dans la plage de 6 à 15 µm.

15. Corps composite selon l'une des revendications 1 à 14,
**caractérisé en ce qu'**une épaisseur (D) de la couche d'adhésif (3) formée en tant que double couche se situe dans la plage de 3 à 30 µm, en particulier dans la plage de 6 à 23 µm, de préférence dans la plage de 10 à 15 µm.

16. Corps composite selon l'une des revendications 1 à 15,
**caractérisé en ce que**, sous la couche d'adhésif (3) est appliquée, sur la couche de métal (1), une couche de passivation et/ou une couche protectrice (4).

17. Corps composite selon la revendication 16,
**caractérisé en ce que** la couche de passivation et/ou la couche protectrice (4) est formée d'un revêtement trempé qui consiste de préférence en une couche produite par zingage à chaud ou aluminage à chaud.

18. Utilisation d'un vernis pour fils métalliques contenant un amide comme adhésif entre un matériau thermoplastique (2) en polyamide et un matériau métallique, de préférence une couche de métal (1), en particulier pour la production d'un corps composite selon l'une des revendications 1 à 17,
**caractérisée en ce que**, pour la formation d'une couche d'apprêt (3a) se trouvant directement sur la couche de métal (1) de la couche d'adhésif (3), on utilise un vernis pour fils métalliques qui présente une teneur en solide supérieure et/ou une viscosité supérieure à celle d'un vernis pour fils métalliques pour la formation d'une couche de couverture (3b) se trouvant sur celui-ci de la couche d'adhésif (3) et/ou **en ce que** l'amide du vernis pour fils métalliques se présente sous forme de polyamide complètement polymérisé, de copolymère et/ou de prépolymère dans la couche d'apprêt (3a) et la couche de couverture (3b) dans une composition différente telle que la couche de couverture (3b) forme par une réactivité et une capacité de liaison plus faible à température ambiante par rapport à la couche d'apprêt (3a), une couche protectrice contre les influences environnementales nocives telles que l'humidité de l'air.

19. Utilisation selon la revendication 18,
**caractérisée en ce que** le vernis pour fils métalliques contenant un amide est appliqué par pulvérisation, coulage, application à la buse ou au rouleau sur le matériau métallique ou par immersion d'une partie métallique dans le vernis pour fils métalliques contenant un amide.

20. Utilisation selon la revendication 18 ou 19,
**caractérisée en ce que** le vernis pour fils métalliques contenant un amide est fixé par traitement thermique sur le matériau thermoplastique consistant en polyamide.

21. Utilisation selon la revendication 20,
**caractérisée en ce que** le traitement thermique s'effectue à des températures supérieures au point de ramollissement du polyamide, de préférence dans une plage de températures jusqu'à 260 °C.

22. Utilisation selon l'une des revendications 18 à 21,
**caractérisée en ce que** l'on utilise comme vernis pour fils métalliques pour la formation de la couche d'apprêt (3a) un tel vernis présentant une teneur en solide de 30 à 45 % en masse, de préférence de 32 à 38 % en masse.

23. Corps composite selon l'une des revendications 18 à 22,
**caractérisé en ce que** l'on utilise comme vernis pour fils métalliques pour la formation de la couche de couverture (3b), un tel vernis présentant une teneur en solide de 8 à 25 % en masse, de préférence de 10 à 16 % en masse.
